# EUROPÄISCHE PATENTSCHRIFT

(11) **EP 3 138 731 B1**
(45) Veröffentlichungstag und Bekanntmachung des Hinweises auf die Patenterteilung: **15.12.2021**
(21) Anmeldenummer: 15465535.1
(22) Anmeldetag: 03.09.2015
(51) Int. Cl.: B60W 50/02, B60W 30/14

(54) **AUTONOM FAHRENDES FAHRZEUG SOWIE VERFAHREN ZUR ÜBERPRÜFUNG EINES ORDNUNGSGEMÄSSEN SCHEINWERFERZUSTANDS EINES AUTONOM FAHRENDEN FAHRZEUGS**
AUTONOMOUS VEHICLE, AND A METHOD FOR CHECKING A PROPER HEADLAMP STATE OF AN AUTONOMOUS VEHICLE
VÉHICULE AUTONOME ET PROCÉDÉ DE VÉRIFICATION D'UN ÉTAT DE PHARE RÈGLEMENTAIRE D'UN VÉHICULE AUTONOME

(43) Veröffentlichungstag der Anmeldung: 08.03.2017
(73) Patentinhaber: Continental Automotive GmbH, 30165 Hannover (DE)
(72) Erfinder: Pahontu, Nicolae, 405100 Campia Turzii (RO)
(74) Vertreter: Continental Corporation

(56) Entgegenhaltungen:
- EP-A1- 2 128 589
- DE-A1-102004 041 429
- DE-A1-102005 057 251
- DE-A1-102010 029 149
- DE-A1-102011 109 440
- FR-A1- 2 829 978
- US-A1- 2011 190 972
- US-A1- 2014 217 888

## Beschreibung

Die Erfindung betrifft eine Fahrzeugkameravorrichtung nach dem Oberbegriff des Anspruchs 1. Weiterhin betrifft die Erfindung ein Kraftfahrzeug mit der Fahrzeugkameravorrichtung sowie ein Verfahren zur Überprüfung eines ordnungsgemäßen Scheinwerferzustands von mindestens einem Fahrzeugscheinwerfer des eigenen Kraftfahrzeugs.

Der Lichtaustritt von eingeschalteten Fahrzeugscheinwerfern reduziert sich zunehmend bei ansteigenden Verschmutzungsgrad oder bei einer Trübung des Scheinwerferglases. Vorbekannt ist eine Vorrichtung zur optischen Überprüfung der Lichtdurchlässigkeit der lichtdurchlässigen Scheibe an Scheinwerfern von Kraftfahrzeugen aus der DE 195 394 22 C2. Die Vorrichtung besteht aus einem gegen die Innenfläche der Scheibe gerichteten Strahlungssender und einem Strahlungsempfänger für eine Infrarotstrahlung und aus einer dem Strahlungsempfänger zugeordneten Einrichtung zur Messung der Größe der reflektierten Strahlung und zur Abgabe eines elektrischen bzw. elektronischen Signals. Der Strahlungssender und der Strahlungsempfänger sind für eine Strahlung in einem Wellenlängenbereich von etwa 700 bis 2000 nm ausgelegt und mit Abstand von der Scheibe außerhalb des Reflektors angeordnet. Der Reflektor weist Öffnungen für den Durchtritt der Strahlung auf.

Eine Verwendung einer Fahrzeugkamera zur Dejustage-Erkennung eines Scheinwerfers im Fahrbetrieb zeigt die US 8310662 B2.

Die DE102010029149A1 offenbart ein Verfahren und ein Steuergerät zum Plausibilisieren eines Leuchtweite-Testwerts eines Lichtkegels eines Fahrzeugscheinwerfers.

Aus der FR2829978B1 ist eine Einrichtung zur automatischen Schaltung von Beleuchtungseinrichtungen eines Fahrzeugs bekannt. Hierbei werden verschiedene Beleuchtungseinrichtungen in Abhängigkeit von der Sichtweite aktiviert. US 2011/190972 A1 offenbart ein autonom fahrendes Fahrzeug, bei dem das Ergebnis der Überprüfung eines ordnungsgemäßen Scheinwerferzustands mitbestimmt, welche Fahrzeuggeschwindigkeiten für ein autonom fahrendes Fahrzeug mit der Fahrzeugkameravorrichtung aktuell verfügbar sind, wobei die Fahrzeuggeschwindigkeit durch eine Fahrerassistenzvorrichtung des Kraftfahrzeugs bei der Auswertung des fehlerhaften Scheinwerferzustands reduziert wird.

Der Erfindung liegt die Aufgabe zugrunde, eine Fahrzeugkameravorrichtung vorzuschlagen, welche eine Bewertung des Scheinwerferzustands von Scheinwerfern eines Kraftfahrzeugs ermöglicht.

Diese Aufgabe wird durch ein autonom fahrendes Fahrzeug mit den Merkmalen des Anspruchs 1, sowie durch ein Verfahren mit den Merkmalen des Anspruchs 10 gelöst.

Vorteilhafte oder bevorzugte Ausführungsformen der Erfindung sind in den Unteransprüchen, der nachfolgenden Beschreibung und durch die Figuren dargelegt.

Es wird eine Fahrzeugkameravorrichtung zur Aufnahme eines Umgebungsbereichs eines Kraftfahrzeugs vorgeschlagen. Bei dem Umgebungsbereich handelt es sich insbesondere um einen in Fahrtrichtung des Kraftfahrzeugs vorausliegenden Umgebungsbereich. Vorzugsweise ist die Fahrzeugkameravorrichtung in einem Kraftfahrzeug integrierbar oder integriert. Beispielsweise kann die Fahrzeugkameravorrichtung in einem Innenraum des Kraftfahrzeugs an einer Windschutzscheibe des Kraftfahrzeugs angeordnet werden oder angeordnet sein. Alternativ ist es ebenso möglich, die Fahrzeugkameravorrichtung außenseitig an einem Karosserieteil wie z. B. an einer Stoßstange des Kraftfahrzeugs anzuordnen. Die Fahrzeugkameravorrichtung kann beispielsweise eine Mono- oder eine Stereokamera sein.

Die Fahrzeugkameravorrichtung umfasst eine Bildsensoreinrichtung wie z. B. einen CMOS-Sensor oder einen CCD-Sensor zur Aufnahme von mindestens einem Bild des Umgebungsbereichs insbesondere während einer Fahrt des Kraftfahrzeugs. Weiterhin umfasst die Fahrzeugkameravorrichtung eine Bildauswerteeinrichtung zur Überprüfung eines ordnungsgemäßen Scheinwerferzustands von mindestens einem Fahrzeugscheinwerfer. Bei dem mindestens einen Fahrzeugscheinwerfer handelt es sich z. B. um einen Frontscheinwerfer für Abblend- und/oder Fernlicht, einen Nebelscheinwerfer, einen Frontscheinwerfer für Tagfahrlicht und/oder einen Frontscheinwerfer für Kurvenlicht. Unter einem ordnungsgemäßen Scheinwerferzustand ist in diesem Zusammenhang insbesondere eine ordnungsgemäße Lichtausgabe durch eine Scheinwerferscheibe von mindestens einer eingeschalteten Leuchte zu verstehen. Insbesondere liegt eine ordnungsgemäße Lichtausgabe für mindestens oder genau einen Fahrzeugscheinwerfer vor, wenn eine vorgegebene Soll-Lichtintensität, Soll-Lichtintensitätsverteilung, Soll-Lichtkegelform und/oder eine Soll-Reichweite des Scheinwerferlichts vorliegt und insbesondere durch die Bildauswerteeinrichtung ausgewertet sind. Die Lichtausgabe kann trotz der Funktionalität der Leuchte beispielsweise aufgrund einer außenseitigen Verschmutzung der Scheinwerferscheibe, einer Beschädigung der Scheinwerferscheibe wie z. B. ein Riss, eines innenseitigen Feuchtigkeitsbeschlags der Scheinwerferscheibe oder aufgrund einer altersbedingten Trübung der Scheinwerferscheibe beeinträchtigt sein.

Zur Überprüfung des ordnungsgemäßen Scheinwerferzustands ist die Bildauswerteeinrichtung ausgebildet, aus dem mindestens einen von der Bildsensoreinrichtung aufgenommenen und übermittelten Bild mindestens eine das Scheinwerferlicht von mindestens oder genau einem Fahrzeugscheinwerfer des eigenen Kraftfahrzeugs beschreibende Größe auszuwerten. Folglich wird insbesondere durch die Auswertung der Bilder überprüft, ob ein ordnungsgemäßer Lichtaustritt des von der mindestens einen eingeschalteten Leuchte ausgegebenen Lichts über die Scheinwerferscheibe erfolgt ist.

Bei elektronischen Defekten wie z. B. eine defekte Leuchte eines Fahrzeugscheinwerfers erfolgt in der Regel eine Störmeldung an eine Steuereinrichtung des Kraftfahrzeugs, um den Fahrzeugführer des Kraftfahrzeugs über den unzureichenden Beleuchtungszustand informieren zu können. Jedoch sind bei der Auswertung der elektronischen Defekte die die ordnungsgemäße Lichtausgabe beeinträchtigende Störeinflüsse wie z. B. eine verschmutzte, beschädigte und/oder eine getrübte Scheinwerferscheibe nicht erfassbar. Folglich ist durch die Auswertung der mindestens einen das Scheinwerferlicht beschreibenden Größe ein ordnungsgemäßer Scheinwerferzustand überprüfbar und folglich ein fehlerhafter Scheinwerferzustand ermittelbar.

Erfindungsgemäß ist die Bildauswerteeinrichtung zur Überprüfung des ordnungsgemäßen Scheinwerferzustands ausgebildet, aus dem mindestens einen Bild mindestens oder genau einen Lichtintensitätswert des Scheinwerferlichts des mindestens einen Fahrzeugscheinwerfers als die beschreibende Größe auszuwerten. Somit ist die Bildauswerteeinrichtung insbesondere ausgebildet, die Lichtintensität des Scheinwerferlichts in einem punktuellen Bildbereich als die beschreibende Größe auszuwerten. Beispielsweise ist der mindestens oder genau eine Lichtintensitätswert aus dem Bild mittels eines Helligkeitsalgorithmus ausgewertet.

Erfindungsgemäß ist die Bildauswerteeinrichtung zur Überprüfung des ordnungsgemäßen Scheinwerferzustands ausgebildet, aus dem mindestens einen Bild eine Lichtintensitätsverteilung des Scheinwerferlichts des mindestens einen Fahrzeugscheinwerfers als die beschreibende Größe auszuwerten. Erfindungsgemäß ist die Lichtintensitätsverteilung über die Auswertung von mindestens zwei entlang einer Hauptstrahlrichtung des Scheinwerferlichts vorliegenden Lichtintensitätswerten ausgewertet. Aufgrund des abnehmenden Lichtintensitätswerts mit zunehmender Entfernung zum eigenen Kraftfahrzeug stellt die Lichtintensitätsverteilung einen zuverlässigen Parameter zur Überprüfung eines ordnungsgemäßen Scheinwerferzustands dar.

Bei einer dritten bevorzugten Ausführungsform ist die Bildauswerteeinrichtung zur Überprüfung des ordnungsgemäßen Scheinwerferzustands ausgebildet, aus dem mindestens einen Bild eine Lichtkegelform des Scheinwerferlichts des mindestens einen Fahrzeugscheinwerfers als die beschreibende Größe auszuwerten. Beispielsweise ist die Lichtkegelform aus dem mindestens einen Bild mittels eines Muster- und/oder Helligkeitsalgorithmus ausgewertet. Da das Scheinwerferlicht des jeweiligen Fahrzeugscheinwerfers eine charakteristische Lichtkegelform aufweist, stellt die Lichtkegelform einen weiteren zuverlässigen Parameter zur Überprüfung eines ordnungsgemäßen Scheinwerferzustands dar.

Bei einer vierten bevorzugten Ausführungsform ist die Bildauswerteeinrichtung zur Überprüfung des ordnungsgemäßen Scheinwerferzustands ausgebildet, aus dem mindestens einen Bild eine Reichweite des Scheinwerferlichts des mindestens einen Fahrzeugscheinwerfers des eigenen Kraftfahrzeugs als die beschreibende Größe auszuwerten. Insbesondere ist zumindest der Abbildungsmaßstab des in dem Bild aufgenommenen Umgebungsbereichs zur Umrechnung der reellen und virtuellen Reichweite des Scheinwerferlichts bekannt. Vorzugsweise wird zur Auswertung der Reichweite der Helligkeitsverlauf einer Hauptstrahlrichtung des Scheinwerferlichts ausgewertet. Die Reichweite ist charakteristisch für die verschiedenen Einschaltzustände der Fahrzeugscheinwerfer und ist somit ein weiterer zuverlässiger Parameter zur Überprüfung eines ordnungsgemäßen Scheinwerferzustands.

Besonders bevorzugt ist die Bildauswerteeinrichtung ausgebildet, die mindestens eine das Scheinwerferlicht beschreibende Größe, somit insbesondere den mindestens einen Lichtintensitätswert, die Lichtintensitätsverteilung, die Lichtkegelform und/oder die Reichweite des Scheinwerferlichts mit mindestens einer vordefinierten Referenzgröße oder mit einem vordefinierten Referenzgrößenbereichs zu vergleichen. Vorzugsweise ist die vordefinierte Referenzgröße bzw. der Referenzgrößenbereich in einer Look-up Tabelle hinterlegt und durch die Bildauswerteeinrichtung abrufbar. Beispielsweise ist die Look-up Tabelle auf einer Speichereinrichtung der Fahrzeugkameravorrichtung abgespeichert. Vorzugsweise handelt es sich bei der Referenzgröße um einen oberen oder unteren Grenzwert und bei dem Referenzgrößenbereich um einen durch einen oberen und unteren Grenzwert festgelegten Soll-Bereich. Vorzugsweise ist mittels eines Vergleichs der das Scheinwerferlicht beschreibenden Größe und der vordefinierten Referenzgröße überprüfbar, ob ein ordnungsgemäßer Scheinwerferzustand vorliegt. Insbesondere wird der ordnungsgemäße Scheinwerferzustand ermittelt, sollte die Größe innerhalb des Referenzgrößenbereichs, alternativ keine Überschreitung der Referenzgröße ausgewertet sein. Folglich ist insbesondere bei einer Grenzwertüberschreitung ein fehlerhafter Scheinwerferzustand ermittelt.

Die das auszuwertende Scheinwerferlicht beschreibende Größe ist insbesondere abhängig von dem Einschaltzustand des mindestens einen Fahrzeugscheinwerfers. Unter dem Einschaltzustand ist in diesem Zusammenhang die Reichweite des Scheinwerferlichts des mindestens einen Fahrzeugscheinwerfers, der Stellmodus des mindestens einen Fahrzeugscheinwerfers und/oder die Anzahl an eingeschalteten Fahrzeugscheinwerfern des eigenen Kraftfahrzeugs zu verstehen. Vor diesem Hintergrund ist beispielsweise vorgesehen, dass die Look-up Tabelle für die verschiedenen Einschaltzustände jeweils eine vordefinierte Referenzgröße bzw. einen Referenzgrößenbereich umfasst.

Bei einer bevorzugten Umsetzung der Erfindung ist die Bildauswerteeinrichtung ausgebildet, aus dem mindestens einen Bild das Scheinwerferlicht innerhalb mindestens eines Suchbildbereichs auszuwerten. Vorzugsweise ist der Suchbildbereich ein vordefinierter, somit ein statisch festgelegter Bildausschnitt in dem Bild, welcher das Scheinwerferlicht bei einem ordnungsgemäßen Scheinwerferzustand und die Funktionalität der Leuchten vorausgesetzt, beinhaltet. Durch die Auswertung der beschreibenden Größe ausschließlich in dem festgelegten Suchbildbereich ist der hierfür erforderliche Rechenaufwand vergleichsweise zur Auswertung des Gesamtbildes reduziert. Aufgrund der verschieden möglichen Reichweiten des Scheinwerferlichts je nach dem Einschaltzustand des mindestens einen Fahrzeugscheinwerfers ist insbesondere vorgesehen, dass für jeden möglichen Einschaltzustand der Fahrzeugscheinwerfer des Kraftfahrzeugs jeweils ein Suchbildbereich festgelegt ist. Folglich können die den verschiedenen Einschaltzuständen zugeordneten Suchbildbereiche in dem Bild insbesondere in ihrer Größe und/oder Relativposition variieren.

Erfindungsgemäß umfasst die Bildauswerteeinrichtung eine Eingangsschnittstelle zur Erfassung des aktuellen Einschaltzustands des mindestens einen Fahrzeugscheinwerfers. Insbesondere ist die Bildauswerteeinrichtung über die Eingangsschnittstelle mit einer Ausgangsschnittstelle der Steuereinrichtung des Kraftfahrzeugs verbindbar oder verbunden. Insbesondere ist die Steuereinrichtung ausgebildet, Informationsdaten über den Einschaltzustand des mindestens einen Fahrzeugscheinwerfers zu erfassen und an die Bildauswerteeinrichtung zu übermitteln. Vorzugsweise ist die Bildauswerteeinrichtung zur Anpassung der vordefinierten Referenzgröße, des vordefinierten Referenzgrößenbereichs und/oder des Suchbildbereichs an den aktuellen Einschaltzustand des mindestens einen Fahrzeugscheinwerfers ausgebildet. Auf diese Weise erfolgt eine Überprüfung des ordnungsgemäßen Scheinwerferzustands in Abhängigkeit des aktuellen Einschaltzustands des mindestens einen Fahrzeugscheinwerfers.

Bei einer bevorzugten Ausgestaltung ist die Bildauswerteeinrichtung ausgebildet, Informationsdaten zur Wetterlage, zum Nässezustand der Fahrbahnoberfläche, zum aktuellen Tageslicht, zu Lichtquellen weiterer Verkehrsteilnehmer oder Objekten wie z. B. Laternen und/oder zum Fahrbahnverlauf im Umgebungsbereich des eigenen Kraftfahrzeugs von anderen Fahrzeugsensoren zu empfangen und beim Auswerten der das Scheinwerferlicht beschreibenden Größe aus dem mindestens einen von der Bildsensoreinrichtung aufgenommenen Bild zu berücksichtigen.

Eine besonders bevorzugte Umsetzung der Erfindung sieht vor, dass Bilder mit einem erfassten Störlicht anderer, vom Kraftfahrzeug externer Lichtquellen, in dem mindestens einen Suchbildbereich durch die Bildauswerteeinrichtung für die Überprüfung des ordnungsgemäßen Scheinwerferzustands des mindestens einen Fahrzeugscheinwerfers ausgeschlossen sind. Somit wird insbesondere von externen Lichtquellen ausgesandtes Licht als Störlicht erfasst, sollte die externe Lichtquelle und folglich das ausgesandte Licht in dem mindestens einen Suchbildbereich vorliegen oder die externe Lichtquelle zwar außerhalb des Suchbildbereichs vorliegen, jedoch eine Reichweite des ausgesandten Lichts in den Suchbildbereich vermutet werden. Durch das Ausschließen von einem ein Störlicht beinhaltenden Bild kann eine durch Störlicht verursachte, fehlerhafte Auswertung der das Scheinwerferlicht des eigenen Kraftfahrzeugs beschreibenden Größe verhindert werden.

Vorzugsweise ist die Bildauswerteeinrichtung ausgebildet, aus dem mindestens einen Bild erfassbares Störlicht auszuwerten. Bei dem aus dem mindestens einen Bild erfassbaren Störlicht handelt es sich beispielsweise um Licht von Rücklichtern vorausfahrender Kraftfahrzeuge, um Licht von Frontlichtern entgegenkommender Kraftfahrzeugen, an Reflektoren oder an einem Verkehrszeichen reflektiertes Licht. Da das aus dem Bild erfassbare Störlicht im Allgemeinen einen charakteristischen Helligkeitsverlauf und/oder eine charakteristische Form aufweist, wie z. B. das Scheinwerferlicht eines entgegenkommenden Kraftfahrzeugs, ist eine Unterscheidung zu den für das Scheinwerferlicht des eigenen Kraftfahrzeugs charakteristischen Größen zuverlässig möglich.

Jedoch ist es ebenso möglich, dass Störlicht in dem Bild zwar vorliegt, jedoch aus dem Bild nicht unmittelbar durch die Bildauswerteeinrichtung erfassbar ist. So ist es beispielsweise möglich, dass das Scheinwerferlicht durch Nebel, Schnee oder Regen reflektiert und somit die in dem mindestens einen Bild auszuwertende beschreibende Größe des Scheinwerferlichts wie z. B. die Lichtintensitätsverteilung verändert ist. Eine weitere exemplarische Verkehrssituation ist z. B. die Abhängigkeit der beschreibenden Größe des Scheinwerferlichts vom Fahrbahnverlauf. So ist es möglich, dass bei einer Kurve das Scheinwerferlicht an Bäumen oder weiteren am Fahrbahnrand vorliegenden Objekten reflektiert und folglich auch hier die das Scheinwerferlicht beschreibende Größe vergleichsweise zu einer geradlinigen Fahrbahn verändert ist. Vor diesem Hintergrund ist die Bildauswerteeinrichtung vorzugsweise ausgebildet, zur Erfassung des Störlichts die Informationsdaten zur Wetterlage, zum Nässezustand der Fahrbahnoberfläche, zum aktuellen Tageslicht, zu Lichtquellen weiterer Verkehrsteilnehmer oder Objekten wie z. B. Laternen und/oder zum Fahrbahnverlauf im Umgebungsbereich des eigenen Kraftfahrzeugs auszuwerten. Insbesondere werden die Bilder ausgeschlossen, sollte mittels der ausgewerteten Informationsdaten eine externe Lichtquelle ermittelt sein, welche die mindestens eine beschreibende Größe des Scheinwerferlichts verändert oder verändern könnte. Beispielsweise werden die Informationsdaten über einen Backend-Server des Kraftfahrzeugs bereitgestellt.

Insbesondere bestimmt das Ergebnis der Überprüfung eines ordnungsgemäßen Scheinwerferzustands mit, welche Fahrerassistenzfunktionen auf Grundlage von Bildern der Fahrzeugkameravorrichtung aktuell für den Fahrer verfügbar sind. So kann z. B. eine Verkehrszeichenerkennung bei der Auswertung einer unzureichenden Reichweite des Scheinwerferlichts insbesondere bei Dunkelheit ausgeschlossen werden, um eine mögliche Nichterkennung oder verspätete Verkehrszeichenerkennung zu vermeiden.

Weiterhin sieht die Erfindung vor, dass das Ergebnis der Überprüfung eines ordnungsgemäßen Scheinwerferzustands mitbestimmt, welche Fahrzeuggeschwindigkeiten für ein autonom fahrendes Fahrzeug mit der Fahrzeugkameravorrichtung aktuell verfügbar sind. Auf diese Weise kann die Verkehrssicherheit erhöht werden.

Einen weiteren Gegenstand der Erfindung betrifft ein Kraftfahrzeug mit der Fahrzeugkameravorrichtung nach der vorhergehenden Beschreibung. Erfindungsgemäß umfasst die Fahrzeugkameravorrichtung die Steuereinrichtung, wobei die Steuereinrichtung Informationsdaten über den Einschaltzustand des mindestens einen Fahrzeugscheinwerfers erfasst. Erfindungsgemäß sind die erfassten Informationsdaten über den Einschaltzustand an die Bildauswerteeinrichtung übermittelt.

Sollte ein fehlerhafter Scheinwerferzustand ausgewertet sein, wird beispielsweise ein automatischer Wischvorgang für den mindestens einen Scheinwerfer eingeleitet. Alternativ oder optional ergänzend umfasst das Kraftfahrzeug eine Ausgabeeinheit, wobei die Ausgabeeinheit ausgebildet ist, den Fahrzeugführer des Kraftfahrzeugs über den ausgewerteten fehlerhaften Scheinwerferzustand zu informieren. Beispielsweise wird ein optischer Hinweis mittels eines blinkenden und/oder farbverändernden Lichtsymbols auf einer Instrumententafel des Kraftfahrzeugs ausgegeben. Erfindungsgemäß ist es vorgesehen, dass die Fahrzeuggeschwindigkeit durch eine Fahrerassistenzvorrichtung des Kraftfahrzeugs bei der Auswertung des fehlerhaften Scheinwerferzustands reduziert wird.

Ferner betrifft die Erfindung ein Verfahren zur Überprüfung des ordnungsgemäßen Scheinwerferzustands eines autonom fahrenden Fahrzeugs mit der Fahrzeugkameravorrichtung nach der vorhergehenden Beschreibung.

Weitere Merkmale, Vorteile und Wirkungen der Erfindung ergeben sich aus der nachfolgenden Beschreibung eines bevorzugten Ausführungsbeispiels der Erfindung. Dabei zeigen:
- Figur 1: in einer schematischen Blockdarstellung ein Kraftfahrzeug mit einer Fahrzeugkameravorrichtung als ein Ausführungsbeispiel der Erfindung;
- Figur 2: schematisch dargestellt die Überprüfung eines ordnungsgemäßen Scheinwerferzustands von Fahrzeugfrontscheinwerfern des Kraftfahrzeugs aus Figur 1;
- Figur 3: die Verkehrsszene aus Figur 2 mit dem Kraftfahrzeug aus Figur 1 mit einem in einem Bild erfasstem Störlicht einer externen Lichtquelle.

Einander entsprechende Teile sind in allen Figuren jeweils mit den gleichen Bezugszeichen versehen.

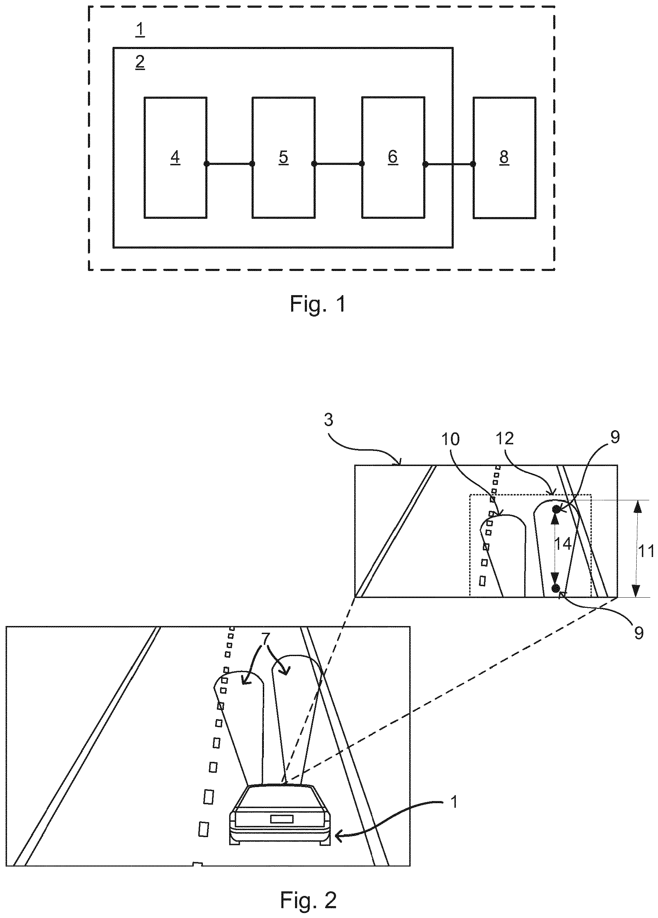

Figur 1 zeigt in einer schematischen Darstellung ein Kraftfahrzeug 1 mit einer Fahrzeugkameravorrichtung 2 zur Aufnahme von mindestens einem Bild 3 eines Umgebungsbereichs des Kraftfahrzeugs 1. Die Fahrzeugkameravorrichtung 2 umfasst eine Optik 4 zur Projektion von Licht sowie eine Bildsensoreinrichtung 5 zur Erfassung des von der Optik 3 projizierten Lichts. Zur Aufnahme des Umgebungsbereichs ist die Fahrzeugkameravorrichtung 1 in Fahrtrichtung des Kraftfahrzeugs 2 gerichtet. Beispielsweise ist die Fahrzeugkameravorrichtung 1 im Innenraum des Kraftfahrzeugs 2 hinter der Windschutzscheibe angeordnet.

Weiterhin umfasst die Fahrzeugkameravorrichtung 2 eine Bildauswerteeinrichtung 6, wobei die Bildsensoreinrichtung 5 zur Übermittlung der aufgenommenen Bilder 3 mit der Bildauswerteeinrichtung 6 verbunden ist. Die Bildauswerteeinrichtung 6 ist ausgebildet, zur Überprüfung eines ordnungsgemäßen Scheinwerferzustands aus dem von der Bildsensoreinrichtung 5 mindestens einen aufgenommenen und übermittelten Bild 3 eine das Scheinwerferlicht 7 von mindestens einem Fahrzeugfrontscheinwerfer des eigenen Kraftfahrzeugs 1 beschreibende Größe 9, 10, 11, 14 auszuwerten. Die Auswertung erfolgt, sollte mindestens ein Frontscheinwerfer des Kraftfahrzeugs 1 eingeschaltet und die Funktionalität der Leuchten des mindestens einen eingeschalteten Frontscheinwerfers festgestellt worden sein. Beispielsweise handelt es sich bei der zu beschreibenden Größe um eine ausgewertete Lichtintensität 9, Lichtintensitätsverteilung 14, Lichtkegelform 10 und/oder um eine Reichweite 11 des Scheinwerferlichts 7 des mindestens oder genau einen Fahrzeugfrontscheinwerfers.

Beispielsweise ist die Bildauswerteeinrichtung 6 ausgebildet, die aus dem Bild 3 ausgewertete Größe 9, 10, 11, 14 mit mindestens einer vordefinierten Referenzgröße oder einem vordefinierten Referenzgrößenbereichs zu vergleichen, wobei bei einer Überschreitung der mindestens einen vordefinierten Referenzgröße bzw. des Referenzgrößenbereichs ein fehlerhafter Scheinwerferzustand durch die Bildauswerteeinrichtung 6 ermittelt ist.

Eine Steuereinrichtung 8 des Kraftfahrzeugs 1 ist ausgebildet, den aktuellen Einschaltzustand des mindestens einen Fahrzeugscheinwerfers des eigenen Kraftfahrzeugs 1 zu erfassen und an die Bildauswerteeinrichtung 6 zu übermitteln. Bei dem Einschaltzustand handelt es sich um die Anzahl der eingeschalteten Frontscheinwerfer, die Art der eingeschalteten Frontscheinwerfer und/oder um die eingestellte Stellung der Frontscheinwerfer wie beispielsweise der Abblend- und Fernlichtmodus. Die Bildauswerteeinrichtung 6 ist z. B. ausgebildet, in einer Look-up Tabelle die mindestens eine vordefinierte Referenzgröße bzw. den Referenzgrößenbereich für den aktuellen Einschaltzustand zu ermitteln und mit der ausgewerteten, das Scheinwerferlicht beschreibenden Größe zu vergleichen. Anhand des Vergleichs wird z. B. überprüft, ob ein ordnungsgemäßer Scheinwerferzustand vorliegt.

Figur 2 zeigt eine exemplarische Fahrbahnausleuchtung durch die Fahrzeugscheinwerfer des eigenen Kraftfahrzeugs 1, schematisch durch die zwei Lichtkegel dargestellt. Beispielsweise handelt es sich bei dem Einschaltzustand um zwei eingeschaltete Fahrzeugscheinwerfer im Abblendmodus. Zur Überprüfung des ordnungsgemäßen Scheinwerferzustands ist es beispielsweise möglich, aus dem mindestens einen Bild 3 mindestens oder genau einen Lichtintensitätswert 9 des Scheinwerferlichts 7 auszuwerten. Der ausgewertete Lichtintensitätswert 9 ist zur Überprüfung des ordnungsgemäßen Scheinwerferzustands z. B. mit mindestens einem in der für den Abblendlicht-Einschaltzustand in der Look-up Tabelle hinterlegten Referenz-Lichtintensitätswert zu vergleichen. Da der Lichtintensitätswert 9 mit zunehmender Entfernung zum Kraftfahrzeug 1 abnimmt, ist z. B. vorgesehen, den mindestens einen aus dem Bild 3 ausgewerteten Lichtintensitätswert ortsgebunden auszuwerten und/oder ortsgebundene Referenz-Lichtintensitätswerte in der Look-up Tabelle zu hinterlegen.

Bei diesem Ausführungsbeispiel ist in der Hauptstrahlrichtung des mindestens einen Fahrzeugscheinwerfers die Lichtintensitätsverteilung 14 mittels zwei ausgewerteten Lichtintensitätswerten 9 ausgewertet. Die ausgewertete Lichtintensitätsverteilung 14 ist zur Überprüfung des ordnungsgemäßen Scheinwerferzustands z. B. mit mindestens einer in der für den Abblendlicht-Einschaltzustand in der Look-up Tabelle hinterlegte Referenz-Lichtintensitätsverteilung zu vergleichen.

Weiterhin ist die Bildauswerteeinrichtung 6 ausgebildet, die Lichtkegelform 10 des Scheinwerferlichts 7 des jeweiligen Fahrzeugscheinwerfers auszuwerten. Die ausgewertete Lichtkegelform 10 ist zur Überprüfung des ordnungsgemäßen Scheinwerferzustands z. B. mit mindestens einer in der für den Abblendlicht-Einschaltzustand in der Look-up Tabelle hinterlegte Referenz-Lichtkegelform zu vergleichen.

Des Weiteren ist die Bildauswerteeinrichtung 6 ausgebildet, eine Reichweite 11 des Scheinwerferlichts 7 des jeweiligen Fahrzeugscheinwerfers auszuwerten. Die ausgewertete Reichweite 11 ist zur Überprüfung des ordnungsgemäßen Scheinwerferzustands z. B. mit mindestens einer in der für den Abblendlicht-Einschaltzustand in der Look-up Tabelle hinterlegte Referenz-Reichweite zu vergleichen.

Die das Scheinwerferlicht 7 beschreibende Größe 9, 10, 11, 14 wird aus dem Bild 3 innerhalb mindestens eines Suchbildbereichs 12 ausgewertet. Bei dem Suchbildbereich 12, auch bekannt unter dem Begriff Region of Interest (ROI), handelt es sich insbesondere um einen Teilbereich des Gesamtbereichs des jeweils aufgenommenen Bildes 3. Der Suchbildbereich 12 ist ein vordefinierter Bildausschnitt in dem Bild 3, welcher das Scheinwerferlicht 7 bei einem ordnungsgemäßen Scheinwerferzustand zumindest teilweise beinhaltet. Es ist möglich, dass für genau ein Scheinwerferlicht 7 ein Suchbildbereich 12 zugeordnet ist. Bei diesem Ausführungsbeispiel ist jedoch genau ein Suchbildbereich 12 für alle der eingeschalteten Frontfahrzeugscheinwerfer festgelegt. Aufgrund der verschiedenen Reichweiten des Scheinwerferlichts 7 in Abhängigkeit des Einschaltzustands ist vorgesehen, dass für jeden möglichen Einschaltzustand jeweils ein Suchbildbereich 12 festgelegt ist.

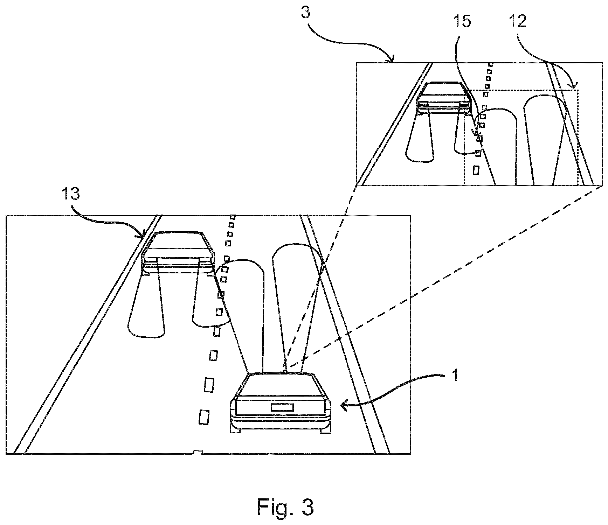

Die Bildauswerteeinrichtung 6 ist ausgebildet, Störlicht 15 von externen Lichtquellen in dem Suchbildbereich 12 zu identifizieren. Exemplarisch ist in Figur 3 ein entgegenkommendes Kraftfahrzeug 13 mit einem eingeschalteten Abblendlicht dargestellt. Die Bildauswerteeinrichtung 6 ist ausgebildet, das in dem Suchbildbereich 12 hineinragende Abblendlicht als Störlicht 15 zu identifizieren und das Bild 3 mit dem identifizierten Störlicht 15 für die Überprüfung des ordnungsgemäßen Scheinwerferzustands der Fahrzeugscheinwerfer auszuschließen. Auf diese Weise wird die Auswertung von Störlicht 15 als das Scheinwerferlicht 7 des eigenen Kraftfahrzeugs 1 vermieden.

### Bezugszeichenliste

- 1: Kraftfahrzeug
- 2: Fahrzeugkameravorrichtung
- 3: Bild
- 4: Optik
- 5: Bildsensoreinrichtung
- 6: Bildauswerteeinrichtung
- 7: Scheinwerferlicht
- 8: Steuereinrichtung
- 9: Lichtintensitätswert
- 10: Lichtkegelform
- 11: Reichweite des Scheinwerferlichts
- 12: Suchbildbereich
- 13: Entgegenkommendes Kraftfahrzeug
- 14: Lichtintensitätsverteilung
- 15: Störlicht

## Patentansprüche

1. Autonom fahrendes Fahrzeug mit Fahrerassistenzsystem und Fahrzeugkameravorrichtung (2) zur Erfassung eines Umgebungsbereichs eines Kraftfahrzeugs (1),
mit einer Bildsensoreinrichtung (5) zur Aufnahme mindestens eines Bildes (3) des Umgebungsbereichs des Kraftfahrzeugs (1),
mit einer Bildauswerteeinrichtung (6), wobei die Bildauswerteeinrichtung (6) ausgebildet ist, zur Überprüfung eines ordnungsgemäßen Scheinwerferzustands aus dem mindestens einen von der Bildsensoreinrichtung (5) aufgenommenen Bild (3) mindestens eine das Scheinwerferlicht (7) von mindestens einem Fahrzeugscheinwerfer des eigenen Kraftfahrzeugs (1) beschreibende Größe (9, 10, 11, 14) auszuwerten, wobei zur Überprüfung des ordnungsgemäßen Scheinwerferzustands die Bildauswerteeinrichtung (6) ausgebildet ist, aus dem mindestens einen Bild (3) eine Lichtintensitätsverteilung (14) des Scheinwerferlichts (7) des mindestens einen Fahrzeugscheinwerfers auszuwerten, wobei die Lichtintensitätsverteilung über die Auswertung von mindestens zwei entlang einer Hauptstrahlrichtung des Scheinwerferlichts vorliegenden Lichtintensitätswerten ausgewertet wird, wobei weiterhin eine Steuereinrichtung (8) vorgesehen ist, wobei die Steuereinrichtung (8) Informationsdaten über den Einschaltzustand des mindestens einen Fahrzeugscheinwerfers erfasst, und wobei die Steuereinrichtung (8) die Informationsdaten über den Einschaltzustand des mindestens einen Fahrzeugscheinwerfers über eine Ausgangsschnittstelle an die Bildauswerteeinrichtung übermittelt und wobei das Ergebnis der Überprüfung eines ordnungsgemäßen Scheinwerferzustands mitbestimmt, welche Fahrzeuggeschwindigkeiten für ein autonom fahrendes Fahrzeug mit der Fahrzeugkameravorrichtung (2) aktuell verfügbar sind wobei die Fahrzeuggeschwindigkeit durch eine Fahrerassistenzvorrichtung des Kraftfahrzeugs bei der Auswertung des fehlerhaften Scheinwerferzustands reduziert wird.

2. Fahrzeugkameravorrichtung (2) nach einem der vorhergehenden Ansprüche, wobei zur Überprüfung des ordnungsgemäßen Scheinwerferzustands die Bildauswerteeinrichtung (6) ausgebildet ist, aus dem mindestens einen Bild (3) eine Lichtkegelform (10) des Scheinwerferlichts (7) des mindestens einen Fahrzeugscheinwerfers auszuwerten.

3. Fahrzeugkameravorrichtung (2) nach einem der vorhergehenden Ansprüche, wobei zur Überprüfung des ordnungsgemäßen Scheinwerferzustands die Bildauswerteeinrichtung (6) ausgebildet ist, aus dem mindestens einen Bild (3) eine Reichweite (10) des Scheinwerferlichts (7) des mindestens einen Fahrzeugscheinwerfers auszuwerten.

4. Fahrzeugkameravorrichtung (2) nach einem der vorhergehenden Ansprüche, wobei die Bildauswerteeinrichtung (6) ausgebildet ist, die mindestens eine das Scheinwerferlicht (7) beschreibende Größe (9, 10, 11, 14) mit mindestens einer vordefinierten Referenzgröße oder einem vordefinierten Referenzgrößenbereich zu vergleichen, wobei bei einer Überschreitung der vordefinierten Referenzgröße bzw. des Referenzgrößenbereichs ein fehlerhafter Scheinwerferzustand des mindestens einen Fahrzeugscheinwerfers ermittelt ist.

5. Fahrzeugkameravorrichtung (2) nach einem der vorhergehenden Ansprüche, wobei die Bildauswerteeinrichtung (6) ausgebildet ist, aus dem mindestens einen Bild (3) die das Scheinwerferlicht (7) beschreibende Größe (9, 10, 11, 14) innerhalb mindestens eines Suchbildbereichs (12) auszuwerten, wobei der Suchbildbereich (12) ein vordefinierter Bildausschnitt in dem mindestens einen Bild (3) ist, welcher das Scheinwerferlicht (7) bei einem ordnungsgemäßen Scheinwerferzustand zumindest teilweise beinhaltet.

6. Fahrzeugkameravorrichtung (2) nach Anspruch 4 oder 5, wobei die Bildauswerteeinrichtung (6) eine Eingangsschnittstelle zur Erfassung eines aktuellen Einschaltzustands des mindestens einen Fahrzeugschweinwerfers des eigenen Kraftfahrzeugs (1) umfasst, wobei die Bildauswerteeinrichtung (6) ausgebildet ist, die vordefinierte Referenzgröße bzw. den vordefinierten Referenzgrößenbereich und/oder den Suchbildbereich (12) an den aktuellen Einschaltzustand des mindestens einen Fahrzeugscheinwerfers anzupassen.

7. Fahrzeugkameravorrichtung (2) nach einem der vorhergehenden Ansprüche, wobei die Bildauswerteeinrichtung (6) ausgebildet ist, ein Bild (3) mit einem erfassten Störlicht (15) weiterer Lichtquellen in dem mindestens einen Suchbildbereich (12) für die Überprüfung des ordnungsgemäßen Scheinwerferzustands des mindestens einen Fahrzeugscheinwerfers auszuschließen.

8. Fahrzeugkameravorrichtung (2) nach einem der vorhergehenden Ansprüche, wobei die Bildauswerteeinrichtung (6) ausgebildet ist, Informationsdaten zur Wetterlage, zum Nässezustand der Fahrbahnoberfläche, zum aktuellen Tageslicht, zu Lichtquellen weiterer Verkehrsteilnehmer und/oder zum Fahrbahnverlauf im Umgebungsbereich des eigenen Kraftfahrzeugs (1) von anderen Fahrzeugsensoren zu empfangen und beim Auswerten der das Scheinwerferlicht (7) beschreibenden Größe (7, 10, 11, 14) aus dem mindestens einen von der Bildsensoreinrichtung (5) aufgenommenen Bild (3) zu berücksichtigen.

9. Fahrzeugkameravorrichtung (2) nach einem der vorhergehenden Ansprüche, wobei das Ergebnis der Überprüfung eines ordnungsgemäßen Scheinwerferzustands mitbestimmt, welche Fahrerassistenzfunktionen auf Grundlage von Bildern (3) der Fahrzeugkameravorrichtung (2) aktuell für den Fahrer verfügbar sind.

10. Verfahren zur Überprüfung eines ordnungsgemäßen Scheinwerferzustands von mindestens einem Fahrzeugscheinwerfer des eigenen, autonom fahrenden Kraftfahrzeugs (1) mit Fahrerassistenzsystem mittels einer Fahrzeugkameravorrichtung (2) umfassend die folgenden Schritte:
Erfassen mindestens eines Bildes eines Umgebungsbereichs des eigenen Kraftfahrzeugs (1) mittels der Fahrzeugkameravorrichtung (2),
Auswerten des mindestens einen Bildes zur Überprüfung eines ordnungsgemäßen Scheinwerferzustands, wobei aus dem von der Bildsensoreinrichtung mindestens einem aufgenommenen Bild (3) mindestens eine das Scheinwerferlicht (7) von mindestens einem Fahrzeugscheinwerfer des eigenen Kraftfahrzeugs (1) beschreibende Größe (9, 10, 11, 14) ausgewertet wird, wobei zur Überprüfung des ordnungsgemäßen Scheinwerferzustands die Bildauswerteeinrichtung ausgebildet ist, aus dem mindestens einen Bild eine Lichtintensitätsverteilung des Scheinwerferlichts des mindestens einen Fahrzeugscheinwerfers auszuwerten, wobei die Lichtintensitätsverteilung über die Auswertung von mindestens zwei entlang einer Hauptstrahlrichtung des Scheinwerferlichts vorliegenden Lichtintensitätswerten ausgewertet wird, wobei weiterhin eine Steuereinrichtung (8) vorgesehen ist, wobei die Steuereinrichtung (8) Informationsdaten über den Einschaltzustand des mindestens einen Fahrzeugscheinwerfers erfasst, und wobei die Steuereinrichtung (8) die Informationsdaten über den Einschaltzustand des mindestens einen Fahrzeugscheinwerfers über eine Ausgangsschnittstelle an die Bildauswerteeinrichtung übermittelt
Bestimmen welche Fahrzeuggeschwindigkeiten für ein autonom fahrendes Fahrzeug mit der Fahrzeugkameravorrichtung (2) aktuell verfügbar sind, wobei das Ergebnis der Überprüfung des ordnungsgemäßen Scheinwerferzustands mitbestimmend ist, wobei die Fahrzeuggeschwindigkeit durch eine Fahrerassistenzvorrichtung des Kraftfahrzeugs bei der Auswertung des fehlerhaften Scheinwerferzustands reduziert wird.

## Claims

1. Autonomously driving vehicle with a driver assistance system and a vehicle camera apparatus (2) for capturing a surrounding region of a motor vehicle (1), having an image sensor device (5) for recording at least one image (3) of the surrounding region of the motor vehicle (1),
having an image evaluation device (6), wherein, for checking for a correct headlamp state, the image evaluation device (6) is configured to evaluate at least one variable (9, 10, 11, 14) describing the headlamp light (7) of at least one vehicle headlamp of the own motor vehicle (1) based on the at least one image (3) recorded by the image sensor device (5), wherein, for checking for the correct headlamp state, the image evaluation device (6) is configured to evaluate a light intensity distribution (14) of the headlamp light (7) of the at least one vehicle headlamp based on the at least one image (3), wherein the light intensity distribution is evaluated by way of the evaluation of at least two light intensity values present along a main beam direction of the headlamp light, wherein furthermore a control device (8) is provided, wherein the control device (8) captures information data relating to the switch-on state of the at least one vehicle headlamp, and wherein the control device (8) transmits the information data relating to the switch-on state of the at least one vehicle headlamp to the image evaluation device via an output interface and wherein the result of the check for a correct headlamp state contributes to the determination of which vehicle speeds are currently available for an autonomously driving vehicle with the vehicle camera apparatus (2), wherein the vehicle speed is reduced by a driver assistance apparatus of the motor vehicle in the event of the evaluation of the incorrect headlamp state.

2. Vehicle camera apparatus (2) according to one of the preceding claims, wherein, for checking for the correct headlamp state, the image evaluation device (6) is configured to evaluate a light cone shape (10) of the headlamp light (7) of the at least one vehicle headlamp on the basis of the at least one image (3).

3. Vehicle camera apparatus (2) according to either of the preceding claims, wherein, for checking for the correct headlamp state, the image evaluation device (6) is configured to evaluate a range (10) of the headlamp light (7) of the at least one vehicle headlamp on the basis of the at least one image (3).

4. Vehicle camera apparatus (2) according to one of the preceding claims, wherein the image evaluation device (6) is configured to compare the at least one variable (9, 10, 11, 14) describing the headlamp light (7) with at least one predefined reference variable or a predefined reference variable range, wherein an incorrect headlamp state of the at least one vehicle headlamp is ascertained if the predefined reference variable or the reference variable range is exceeded.

5. Vehicle camera apparatus (2) according to one of the preceding claims, wherein the image evaluation device (6) is configured to evaluate the variable (9, 10, 11, 14) describing the headlamp light (7) within at least one search image region (12) on the basis of the at least one image (3), wherein the search image region (12) is a predefined image section in the at least one image (3) that at least partially includes the headlamp light (7) in the event of a correct headlamp state.

6. Vehicle camera apparatus (2) according to Claim 4 or 5, wherein the image evaluation device (6) comprises an input interface for capturing a current switch-on state of the at least one vehicle headlamp of the own motor vehicle (1), wherein the image evaluation device (6) is configured to adapt the predefined reference variable or the predefined reference variable range and/or the search image region (12) to the current switch-on state of the at least one vehicle headlamp.

7. Vehicle camera apparatus (2) according to one of the preceding claims, wherein the image evaluation device (6) is configured to exclude an image (3) with stray light (15) captured from further light sources in the at least one search image region (12) for the check for the correct headlamp state of the at least one vehicle headlamp.

8. Vehicle camera apparatus (2) according to one of the preceding claims, wherein the image evaluation device (6) is configured to receive information data relating to the weather, the wetness state of the driving surface, the current level of daylight, light sources of further road users and/or the course of the road in the surrounding region of the own motor vehicle (1) from other vehicle sensors and to take them into account in the evaluation of the variable (7, 10, 11, 14) describing the headlamp light (7) on the basis of the at least one image (3) recorded by the image sensor device (5).

9. Vehicle camera apparatus (2) according to one of the preceding claims, wherein the result of the check for a correct headlamp state contributes to the determination of which driver assistance functions are currently available for the driver on the basis of images (3) of the vehicle camera apparatus (2).

10. Method for checking for a correct headlamp state of at least one vehicle headlamp of the own, autonomously driving motor vehicle (1) with a driver assistance system by means of a vehicle camera apparatus (2), comprising the following steps:
capturing at least one image of a surrounding region of the own motor vehicle (1) by means of the vehicle camera apparatus (2),
evaluating the at least one image for checking for a correct headlamp state, wherein at least one variable (9, 10, 11, 14) describing the headlamp light (7) of at least one vehicle headlamp of the own motor vehicle (1) is evaluated on the basis of the at least one image (3) recorded by the image sensor device, wherein, for checking for the correct headlamp state, the image evaluation device is configured to evaluate a light intensity distribution of the headlamp light of the at least one vehicle headlamp on the basis of the at least one image, wherein the light intensity distribution is evaluated by way of the evaluation of at least two light intensity values present along a main beam direction of the headlamp light, wherein furthermore a control device (8) is provided, wherein the control device (8) captures information data relating to the switch-on state of the at least one vehicle headlamp, and wherein the control device (8) transmits the information data relating to the switch-on state of the at least one vehicle headlamp to the image evaluation device via an output interface,
determining which vehicle speeds are currently available for an autonomously driving vehicle with the vehicle camera apparatus (2), wherein the result of the check for the correct headlamp state contributes to the determination, wherein the vehicle speed is reduced by a driver assistance apparatus of the motor vehicle in the event of the evaluation of the incorrect headlamp state.

## Revendications

1. Véhicule à conduite autonome comprenant un système d'assistance au conducteur et un arrangement de caméra de véhicule (2) destiné à couvrir une zone environnante d'un véhicule automobile (1),
comprenant un dispositif de capteur d'images (5) destiné à enregistrer au moins une image (3) de la zone environnante du véhicule automobile (1),
comprenant un dispositif d'interprétation d'image (6), le dispositif d'interprétation d'image (6) étant configuré pour, en vue de vérifier un état de phare correct, interpréter, à partir de l'au moins une image (3) enregistrée par le dispositif de capteur d'images (5), au moins une grandeur (9, 10, 11, 14) qui décrit la lumière de phare (7) d'au moins un phare de véhicule du véhicule automobile (1) propre,
le dispositif d'interprétation d'image (6) étant configuré pour, en vue de vérifier l'état de phare correct, interpréter à partir de l'au moins une image (3) une distribution de l'intensité lumineuse (14) de la lumière de phare (7) de l'au moins un phare de véhicule, la distribution de l'intensité lumineuse étant interprétée par le biais de l'interprétation d'au moins deux valeurs d'intensité lumineuse présentes le long d'une direction de rayon principale de la lumière de phare, un dispositif de commande (8) étant en outre présent, le dispositif de commande (8) acquérant des données d'information à propos de l'état mis en circuit de l'au moins un phare de véhicule, et le dispositif de commande (8) communiquant les données d'information à propos de l'état mis en circuit de l'au moins un phare de véhicule par le biais d'une interface de sortie au dispositif d'interprétation d'image et le résultat de la vérification d'un état de phare correct déterminant conjointement quelles vitesses de véhicule sont actuellement disponibles pour un véhicule à conduite autonome comprenant l'arrangement de caméra de véhicule (2), la vitesse de véhicule étant réduite par un arrangement d'assistance au conducteur lors de l'interprétation de l'état de phare défectueux.

2. Arrangement de caméra de véhicule (2) selon l'une des revendications précédentes, le dispositif d'interprétation d'image (6) étant configuré pour, en vue de vérifier l'état de phare correct, interpréter à partir de l'au moins une image (3) une forme de cône lumineux (10) de la lumière de phare (7) de l'au moins un phare de véhicule.

3. Arrangement de caméra de véhicule (2) selon l'une des revendications précédentes, le dispositif d'interprétation d'image (6) étant configuré pour, en vue de vérifier l'état de phare correct, interpréter à partir de l'au moins une image (3) une portée (10) de la lumière de phare (7) de l'au moins un phare de véhicule.

4. Arrangement de caméra de véhicule (2) selon l'une des revendications précédentes, le dispositif d'interprétation d'image (6) étant configuré pour comparer l'au moins une grandeur (9, 10, 11, 14) qui décrit la lumière de phare (7) avec au moins une grandeur de référence prédéfinie ou une plage de grandeurs de référence prédéfinie, un état de phare défectueux de l'au moins un phare de véhicule étant déterminé dans le cas d'un dépassement de la grandeur de référence prédéfinie ou de la plage de grandeurs de référence prédéfinie.

5. Arrangement de caméra de véhicule (2) selon l'une des revendications précédentes, le dispositif d'interprétation d'image (6) étant configuré pour interpréter, à partir de l'au moins une image (3), la grandeur (9, 10, 11, 14) qui décrit la lumière de phare (7) à l'intérieur d'au moins une zone d'image de recherche (12), la zone d'image de recherche (12) étant une portion d'image prédéfinie dans l'au moins une image (3), laquelle contient au moins partiellement la lumière de phare (7) lors d'un état de phare correct.

6. Arrangement de caméra de véhicule (2) selon la revendication 4 ou 5, le dispositif d'interprétation d'image (6) comportant une interface d'entrée destinée à acquérir un état mis en circuit actuel de l'au moins un phare de véhicule du véhicule automobile (1) propre, le dispositif d'interprétation d'image (6) étant configuré pour adapter la grandeur de référence prédéfinie ou la plage de grandeurs de référence prédéfinie et/ou la zone d'image de recherche (12) à l'état mis en circuit actuel de l'au moins un phare de véhicule.

7. Arrangement de caméra de véhicule (2) selon l'une des revendications précédentes, le dispositif d'interprétation d'image (6) étant configuré pour exclure une image (3) avec une lumière parasite (15) capturée d'autres sources de lumière dans l'au moins une zone d'image de recherche (12) pour la vérification de l'état de phare correct de l'au moins un phare de véhicule.

8. Arrangement de caméra de véhicule (2) selon l'une des revendications précédentes, le dispositif d'interprétation d'image (6) étant configuré pour recevoir, de la part d'autres capteurs de véhicule, des données d'informations à propos de la situation météorologique, de l'état mouillé de la surface de la chaussée, de la lumière naturelle actuelle, des sources de lumière d'autres usagers de la voie publique et/ou du tracé de la chaussée dans la zone environnante d'un véhicule automobile (1) propre, et de les prendre en considération lors de l'interprétation de la grandeur (7, 10, 11, 14) qui décrit la lumière de phare (7) à partir de l'au moins une image (3) enregistrée par le dispositif de capteur d'images (5).

9. Arrangement de caméra de véhicule (2) selon l'une des revendications précédentes, le résultat de la vérification d'un état de phare correct déterminant conjointement quelles fonctions d'assistance au conducteur sont actuellement disponibles pour le conducteur sur la base des images (3) de l'arrangement de caméra de véhicule (2).

10. Procédé pour vérifier un état de phare correct d'au moins un phare de véhicule du véhicule automobile (1) propre à conduite autonome comprenant un système d'assistance au conducteur au moyen d'un arrangement de caméra de véhicule (2), comprenant les étapes suivantes :
acquisition d'au moins une image de la zone environnante du véhicule automobile (1) au moyen de l'arrangement de caméra de véhicule (2),
interprétation de l'au moins une image en vue de vérifier un état de phare correct, au moins une grandeur (9, 10, 11, 14) qui décrit la lumière de phare (7) d'au moins un phare de véhicule du véhicule automobile (1) propre étant interprétée à partir de l'au moins une image (3) enregistrée par le dispositif de capteur d'images, le dispositif d'interprétation d'image étant configuré pour,
en vue de vérifier l'état de phare correct, interpréter à partir de l'au moins une image une distribution de l'intensité lumineuse de la lumière de phare de l'au moins un phare de véhicule, la distribution de l'intensité lumineuse étant interprétée par le biais de l'interprétation d'au moins deux valeurs d'intensité lumineuse présentes le long d'une direction de rayon principale de la lumière de phare, un dispositif de commande (8) étant en outre présent, le dispositif de commande (8) acquérant des données d'information à propos de l'état mis en circuit de l'au moins un phare de véhicule, et le dispositif de commande (8) communiquant les données d'information à propos de l'état mis en circuit de l'au moins un phare de véhicule par le biais d'une interface de sortie au dispositif d'interprétation d'image,
détermination des vitesses de véhicule qui sont actuellement disponibles pour un véhicule à conduite autonome comprenant l'arrangement de caméra de véhicule (2), le résultat de la vérification de l'état de phare correct participant à la détermination, la vitesse de véhicule étant réduite par un arrangement d'assistance au conducteur du véhicule automobile lors de l'interprétation de l'état de phare défectueux.
